(19) **Europäisches Patentamt / European Patent Office / Office européen des brevets**

(11) **EP 1 892 035 B1**

(12) **EUROPÄISCHE PATENTSCHRIFT**

(45) Veröffentlichungstag und Bekanntmachung des Hinweises auf die Patenterteilung:
**08.09.2010 Patentblatt 2010/36**

(21) Anmeldenummer: **07112957.1**

(22) Anmeldetag: **23.07.2007**

(51) Int Cl.:
*B01F 5/04* (2006.01)    *B01F 5/06* (2006.01)
*B29C 44/34* (2006.01)    *B29C 44/42* (2006.01)
*B29C 47/10* (2006.01)

(54) **Dosiervorrichtung**

Metering device

Dispositif de dosage

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.08.2006 EP 06119392**

(43) Veröffentlichungstag der Anmeldung:
**27.02.2008 Patentblatt 2008/09**

(73) Patentinhaber: **Sulzer Chemtech AG
8404 Winterthur (CH)**

(72) Erfinder:
- **Schlummer, Christian
  8003 Zürich (CH)**
- **Habibi-Naini, Sasan
  8486 Rikon (CH)**

(74) Vertreter: **Sulzer Management AG
Patentabteilung / 0067
Zürcherstrasse 14
8401 Winterthur (CH)**

(56) Entgegenhaltungen:
**EP-A1- 0 856 353    WO-A-92/17533
DE-A1- 2 241 367    US-A- 5 935 490**

EP 1 892 035 B1

**Beschreibung**

Die Erfindung betrifft eine Dosiervorrichtung, um Additive kontinuierlich, quasikontinuierlich oder diskontinuierlich zu einer zähflüssigen, viskosen oder pastösen Masse, insbesondere einer Kunststoffschmelze zu dosieren.

Aus dem Stand der Technik ist gemäss DE 198 53 021 A1 bekannt, einem plastifizierten Polymer im Schneckenzylinder ein physikalisches Treibmittel zuzudosieren. Die Schnecke fördert dann das Polymer-Treibmittel-Gemisch gegen einen definierten Staudruck in den sogenannten Speicherzylinder. Nach Abschluss der Dosierphase wird die Schmelze aus dem Speicherzylinder mit hoher Geschwindigkeit in die Kavität eingespritzt. Das dosierte und in die Kavität eingespritzte Polymervolumen ist geringer als das Volumen der Kavität, was für ein Niederdruckverfahren charakteristisch ist. In diesem Fall wird das Formnest erst durch Aufschäumen der Schmelze komplett aufgefüllt, wobei der Aufschäumvorgang durch den Druckabfall der Schmelze entlang des Fliessweges ausgelöst wird. Die Werkzeuginnendrücke betragen dabei in der Regel weniger als 70 bar. Ein Nachteil des Niederdruckverfahrens ist die oftmals schlechte Oberflächenqualität der hergestellten Formteile. Um die Oberflächenqualität zu verbessern, kann ein sogenanntes Hochdruckverfahren eingesetzt werden, wobei mit Werkzeuginnendrücken von 100 bar gearbeitet wird.

Um die Oberflächenqualität der Formteile zu verbessern, wird daher in der DE 198 53 021 A1 vorgeschlagen, ein Hochdruckverfahren zur Herstellung geschäumter Formteile zu verwenden. Hierbei wird der gesamte Werkzeughohlraum mit dem Schmelze/Treibmittel-Gemisch gefüllt, wobei das Werkzeugvolumen kleiner als das Volumen des herzustellenden Formteils ist. In einer sich an die Einspritzphase anschliessenden Nachdruckphase werden die Randschichten des Formteils komprimiert, um eine geschlossene Randschicht herzustellen. Das Aufschäumen wird durch die Vergrösserung des Werkzeughohlraums initiiert. Ein derartiges Hochdruckverfahren arbeitet mit einem Werkzeuginnendruck von 100 bar. Nachteilig an diesem Verfahren ist die Notwendigkeit, zur Erzielung einer guten Produktqualität speziell für ein bestimmtes Produkt konstruierte Werkzeuge verwenden zu müssen. Die erwähnte Vergrösserung des Werkzeughohlraums kann durch Verwendung eines Tauchkantenwerkzeugs oder durch Ziehen des Kerns erreicht werden. Die Herstellung derartiger Werkzeuge, insbesondere mit beweglichen Einsätzen, erfordert hohe Präzision. Eine Standard-Spritzgiessmaschine ist für die Herstellung von geschäumten thermoplastischen Formteilen unter Verwendung von sogenannten physikalischen Treibmitteln nicht ohne Modifikationen einsetzbar, da eine Vorplastifizierung zum Eintrag des Treibmittels in die Schmelze erforderlich ist. Diese treibmittelbeladene Schmelze wird mittels Kolbeneinspritzung in das Werkzeug eingebracht. Um ein physikalisches Treibmittel dosiert und homogen in den Schmelzestrom einzubringen, wird gemäss der DE198 53 021 A1 das im Schneckenzylinder plastifizierte Polymer durch einen Ringspalt um einen im Schmelzekanal zentrierten Torpedo geleitet, dessen Aussenhülle aus Sintermetall gefertigt ist. Die äussere Begrenzung des Ringspalts wird durch einen Zylinder gebildet, der ebenfalls aus Sintermetall hergestellt ist. Das Treibmittel kann sowohl über die poröse Aussenhülle des Torpedos als auch über die Sintermetall-Oberfläche des Zylinders in die Schmelze eingebracht werden.

Anstatt des in der DE198 53 021 A1 gezeigten Torpedos kann der Eintrag eines physikalischen, insbesondere gasförmigen Treibmittels über einen aus einem porösen Werkstoff bestehenden Zylinder erfolgen, der zwischen Plastifizierzylinder und Verschlussdüse der Spritzgiessmaschine montiert ist, wie in DE 101 50 329 A1 gezeigt wurde. Im Inneren des porösen Zylinders ist ein statisches Mischelement angeordnet, welches über in den Schmelzekanal hineinreichende Stege verfügt, die für eine Umlagerung der Schmelze und eine Durchmischung des zunächst noch inhomogenen Polymer/Treibmittelsystems während der Einspritzphase sorgen.

Der Einsatz des in der DE 101 50 329 A1 gezeigten porösen Zylinders, der mittels der Verschlussdüse in einer Bohrung der Druckkammer gehalten wird ist in Hochdruckverfahren problematisch, da der poröse Zylinder keine ausreichende Druckbeständigkeit aufweist.

Durch den Innendruck wird der Zylinder auf Zug beansprucht. Die Zugspannung sigma auf jeder der Stirnseiten des Zylinders beträgt:

$$\text{Sigma} = \frac{p}{(r_a^2/r_i^2 - 1)}$$

Die Zugspannung sigma in der Mantelfläche des Zylinders beträgt hingegen

$$\text{Sigma} = \frac{p}{(r_a/r_i - 1)}$$

Nun ist zwar der poröse Zylinder in der DE 101 50 329 A1 dargestellten Anordnung durch die stirnseitige Einspannung auf Druck vorgespannt. Da aber die grösste Zugbelastung gar nicht an den Stirnseiten, sondern entlang der in der DE 101 50 329 A1 geschnitten dargestellten Mantelfläche erfolgt, besteht die Gefahr des Versagens des Zylinders durch einen Riss entlang genau dieser Mantelfläche unvermindert weiter, wenn der Innendruck erhöht wird. Zusätzlich ist der Zylinder aus einem porösen Material aufgebaut, wodurch der Zylinder mechanisch nur beschränkt auf Zug belastbar ist.

Aus diesem Grund eignet sich die in der DE 101 50 329 A1 dargestellte Anordnung nicht oder nur in beschränktem Ausmass zur Dosierung eines Additivs, insbesondere eines Treibmittels im Rahmen eines Verfahrens, bei welchem zumindest in dem Abschnitt, in welchem die Dosierung erfolgt, ein hoher Betriebsdruck herrscht. Für die Anwendung in einem Verfahren, bei welchem die Dosierung bei einem niedrigen Betriebsdruck erfolgt, eignet sich auch insbesondere ein Ausführungsbeispiel nach EP-A-1 717 008, in welchem zur Vergrösserung der Eintragsoberfläche für das Treibmittel im Imprägnierungskörper eine Anzahl parallel zur Hauptströmungsrichtung eingebauter Dosierelemente vorgesehen sind. Die Dosierelemente sind im wesentlichen als poröse Hohlkörper ausgebildet, die von der Polymerschmelze durchströmt werden. Es ist aus US5935490 auch bekannt ein Keramikelement mit Bohrungen vorzusehen, welches als konischer Hohlkörper ausgebildet ist.

Im Inneren der Hohlkörper können statische Mischelemente vorgesehen sein, die eine Homogenisierung des Treibmittels über den gesamten Polymerstrang, der durch den Hohlkörper fliesst, bewirken. Alternativ zu einer Strömung des Polymerstrangs durch die Hohlkörper, kann auch vorgesehen sein, dass das Polymer die Hohlkörper umströmt. Im Inneren des oder der Hohlkörper befindet sich das Treibmittel, welches über die Poren im Hohlkörper in die Polymerschmelze eingetragen wird. Sowohl bei Niederdruckverfahren, als insbesondere auch bei Hochdruckverfahren ist die soeben beschriebene Ausführungsform der Dosierelemente nur bedingt geeignet, da bei Spritzgiessverfahren auch bei niedrigen Kavitätsdrücken hohe Spritzdrücke auftreten können, die zum Versagen eines Dosierelements durch Rissbildung führen können.

Ein weiteres nicht gelöstes Problem stellt die Befestigung des statischen Mischelements an der Innenwand des porösen Zylinders dar. Durch die Befestigung des oder der Mischelemente werden zusätzliche Spannungen in den Zylindermantel eingeleitet. Die Grösse dieser Spannungen variiert zudem periodisch, weil es beim Einströmen der Schmelze in die Werkzeugkavität zum Druckabfall der unter Staudruck plastifizierten Schmelze kommt. Dadurch kommt es zu Druckschwankungen, die sich mit jedem Einspritzzyklus wiederholen, wodurch periodisch schwankende Kräfte in die im Stand der Technik bislang nicht offenbarten Befestigungselemente des statischen Mischers auf dem porösen Zylinder eingeleitet werden.

Eine Lösung für derartige Probleme kann die in der WO200403751 0 A1 dargestellte Anordnung von Dosierelementen zur Beladung eines Polymerschmelzestroms mit einem physikalischen Treibmittel bieten. In der dort dargestellten Anordnung wird anstatt eines porösen Zylinders, der im Anschluss an den Schneckenkolben angeordnet ist, eine Serie von sogenannten dynamischen, also mit dem Schneckenkolben mitbewegbaren Mischelementen vorgesehen, über welche gleichzeitig der Treibmitteleintrag erfolgt.

Allerdings hat sich gezeigt, dass die Mischwirkung der Misch- und Dosierelemente für scher- und verweilzeitempfindliche Materialien nachteilig ist. Daher wurden gemäss EP-A-1 714 767 für derartige Materialien, wie z.B. LSR (liquid silicon rubber) Förderschnecken verwendet, die nur transportieren und nicht homogenisieren oder mischen.

Des weiteren wurde in der DE2241367, die eine Dosiervorrichtung gemäß dem Oberbegriff des Anpruchs offenbart, vorgeschlagen, eine Mehrzahl von porösen Platten mit gegeneinander versetzten Öffnung zum Durchtritt der Polymerschmelze vorzusehen.

Allen mit Hohlkörpern arbeitenden Dosierelementen zum Eintrag eines Treibmittels in eine Polymerschmelze ist gemeinsam, dass sie nur begrenzt gegen Druckbelastungen beständig sind.

Aufgabe der Erfindung ist es, die Dosierelemente derart zu verbessern, dass ihr Einsatz in einem Nieder- oder Hochdruckverfahren für scher-und verweilzeitempfindliche Medien ermöglicht wird.

Eine weitere Aufgabe der Erfindung ist es, die Dosierelemente konstruktiv derart zu gestalten, dass es durch die Kerbwirkung der Durchtrittsöffnungen für das Additiv unter Druckwechselbeanspruchung auch bei Dauerbelastung nicht zu Rissbildungen kommt.

Diese Aufgabe wird durch die im Anspruch 1 definierte Dosiervorrichtung gelöst. Die Dosiervorrichtung umfasst einen ersten, ein Fluid oder eine viskose und/oder fliessfähige pastöse Masse aufnehmenden, Kanalabschnitt, wobei das Fluid den Kanalabschnitt durchströmt und/oder einen weiteren Kanalabschnitt, der von dem Fluid umströmbar ist. Der durchströmte und Kanalabschnitt ist mit den angrenzenden Kanalabschnitten mit einer unlösbaren Verbindung verbindbar, wobei die Verbindung insbesondere eine Schweissverbindung umfasst. Im von den Kanalabschnitten begrenzten Strömungsraum ist zumindest ein statisches Mischelement vorsehbar. Das statische Mischelement ist als Teil eines Kanalabschnitts ausgebildet, insbesondere sind das Mischelement sowie der Kanalabschnitt als Druckgussteil ausgebildet. Das Dosierelement weist einen im wesentlichen kreisförmigen Eintrittsquerschnitt auf. Alternativ dazu weist das Dosierelement einen Eintrittsquerschnitt auf, der eine Längsseite und eine Breitseite aufweist, wobei das Verhältnis der Längen der Längsseite zu der Breitseite zumindest 1,25 beträgt. Alternativ dazu oder in Kombination mit den vorhin beschriebenen Ausführungsformen weist das Dosierelement einen Eintrittsquerschnitt auf, der abschnittweise konvexe und/oder konkave Randkurven und/oder abschnittweise gerade Längsseiten aufweist. Das Dosierelement kann nach jeder der vorhin beschriebenen Ausführungsformen eine porenförmige oder kapillarartige Struktur aufweisen. Der Querschnitt ist in einem Schnitt parallel zur Hauptachse des Dosierelements zylinderförmig, konisch, abschnittsweise zylinderförmig und/oder konisch mit sich abschnittsweise unterscheidenden Durchmessern ausgebildet. Das Dosierelement ragt gegebenenfalls in das Innere des Strömungskanals hinein. Zwei benachbarte Dosierelemente weisen einen Abstand voneinander auf, der zumindest gleich gross wie ihr minimaler Durchmesser ist, vorteilhafterweise das 1 bis 1,8-fache des minimalen Durchmessers des Dosierelements beträgt, insbesondere das 1 bis 1,6-fache dieses Durchmessers, besonders bevorzugt das 1 bis 1,5-fache dieses Durchmessers beträgt. Der Anteil der Oberfläche des Kanalabschnitts, der von Dosierelementen eingenommen wird, beträgt bei einem maximalen Betriebsdruck 1000 bar maximal 20%.

Nachfolgend wird die Erfindung anhand der Zeichnungen erläutert. Es zeigen:

Fig. 1     eine Vorrichtung zur Herstellung eines Formteils aus einer flüssigen, viskosen oder pastösen Formmasse

Fig. 2     zeigt ein weiteres Ausführungsbeispiel einer Vorrichtung zur Herstellung eines Formteils aus einer flüssigen, viskosen oder pastösen Formmasse

Fig. 3     zeigt ein drittes Ausführungsbeispiel einer Vorrichtung zur Herstellung eines Formteils aus einer flüssigen, viskosen oder pastösen Formmasse

Fig. 4a    zeigt einen Längsschnitt eines ersten Ausführungsbeispiels einer Dosiervorrichtung von Additiven zu zähflüssigen Fluiden oder pastösen Massen

Fig. 4b    zeigt einen Schnitt normal zur Hauptströmungsrichtung der Dosiervorrichtung nach Fig. 4a

Fig. 5a    zeigt ein zweites Ausführungsbeispiel einer Dosiervorrichtung mit Ringspalt

Fig. 5b    zeigt einen Schnitt normal zur Hauptströmungsrichtung der Dosiervorrichtung nach Fig. 5a

Fig. 6     zeigt einen Längsschnitt durch ein weiteres Ausführungsbeispiel für eine Dosiervorrichtung mit Dosierelementen mit länglicher Struktur und Mischelementen in der Dosiervorrichtung

Fig. 7     zeigt ein Dosierelement, das in ein Mischelement integriert ist

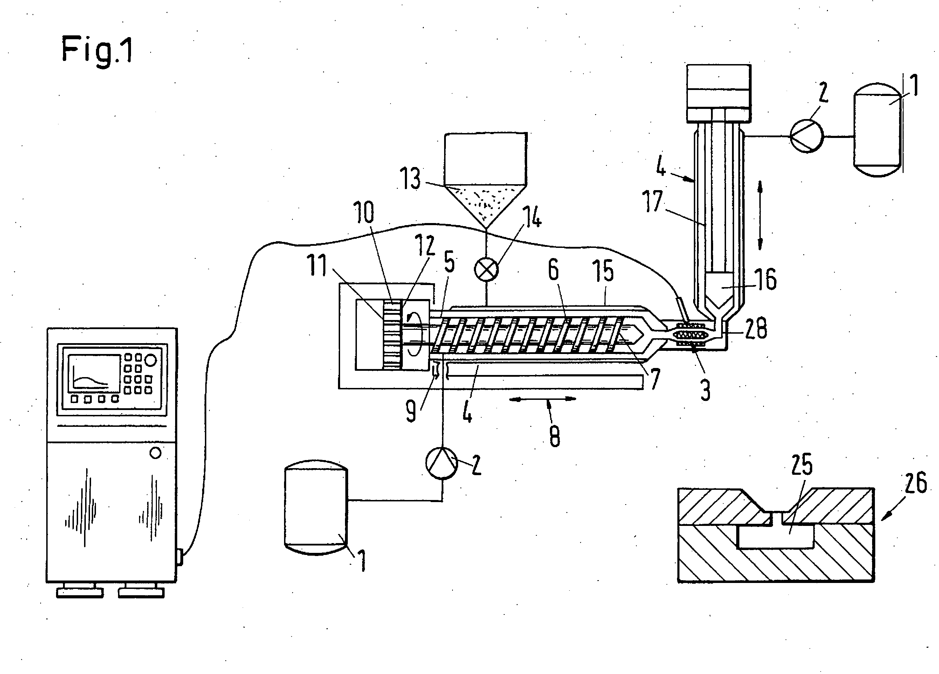

In Fig. 1 ist ein erstes Ausführungsbeispiel für eine Vorrichtung zur Dosierung eines Treibmittels in ein flüssiges, viskoses oder pastöses Medium gezeigt. Bei dem flüssigen Medium handelt es sich insbesondere um eine Flüssigkeit mit hoher Viskosität, wie beispielsweise eine Polymerschmelze.

Ein pastöses Medium umfasst beispielsweise ein LSR-Polymersystem. LSR steht dabei für "liquid silicon rubber", also einen flüssigen Silikonkautschuk. LSR ist ein Zweikomponenten-Polymersystem, dessen Komponenten einzeln nicht reaktionsfähig sind und das im Handel mit vorgebbar eingestellten Eigenschaften angeboten wird. Die LSR-Komponenten liegen für die Verarbeitung zu einem Formteil als pastöse Massen vor. Sie werden mittels spezieller Pump-, Dosier- und Mischtechnik zu einer Formmasse vereinigt. Durch Mischen der Komponenten und unter Erhöhung der Temperatur (150 bis 200°C) laufen in der Formmasse Vernetzungreaktionen ab. Diese Reaktion erfolgt beispielsweise als platinkatalysierte Additionsvernetzung, bei der ein Polysiloxan mit einem Vernetzer, bestehend aus kurzen Polymerketten, und unter Einfluss des Platinkatalysators reagiert. Der Vernetzer und der Katalysator sind partielle Mittel zur Durchführung der Vernetzungsreaktion, wobei die zwei Komponenten unter Einfluss des Vernetzungsmittels eine Formmasse ausbilden. Dabei wird der Vernetzer mit dem Polysiloxan und dem Pt-Katalysator zugeführt.

Ein weiteres Anwendungsgebiet ist die Verarbeitung von schäumbaren Polymerschmelzen. Eine derartige Polymerschmelze wird zumeist durch Wärmezufuhr aus einem Granulat erhalten, wobei das Granulat vorteilhafterweise durch einen Zylinder, der in der Literatur auch als Plastifizierzylinder bezeichnet wird, gefördert wird, der gegebenenfalls mit Heizvorrichtungen ausgestattet ist. Im Zylinder wird somit ein Granulat in eine Schmelze, das heisst, in ein fliessfähiges Medium umgewandelt. Dem fliessfähigen Medium wird ein Additiv zugesetzt, das heisst eine gasförmige oder flüssige Substanz, bei welchem es sich insbesondere um ein Treibmittel, bevorzugt ein physikalisches Treibmittel, einen Farbstoff, einen pharmazeutischen Wirkstoff, ein Verarbeitungshilfsmittel, eine Substanz zur Behandlung von Wasser, oder auch ein Füllstoff, wie Kreide, Talkum oder einen Faserstoff, insbesondere eine Langglasfaser, handeln kann, bevor es als Formmasse in einem Extrusionsverfahren kontinuierlich weiterverarbeitet wird oder batchweise in einem Spritzgiessverfahren zu einem zumindest teilweise geschäumten Formteil weiterverarbeitbar ist. Als Formmasse soll in der Folge fliessfähiges Medium, insbesondere Schmelze, bezeichnet werden, welchem bereits ein Additiv beigemischt worden ist.

Diese Formmasse kann einer Spritzgiessmaschine zugeführt werden, um in eine Form mit den Abmessungen des zu erstellenden Formteils eingespritzt und zu festen Polymerformteilen verarbeitet zu werden. Für den vorliegenden Fall soll ein Spritzgiessverfahren als diskontinuierliches Verfahren angesehen werden, da die Dosierung der Formmasse in eine Kavität eines formgebenden Werkzeugs diskontinuierlich erfolgt. Nach einem weiteren Ausführungsbeispiel wird die Formmasse erst in der Spritzgiessmaschine erzeugt. In diesem Fall ist die Dosiervorrichtung direkt in der Spritzgiessmaschine angeordnet. In diesem Fall kann die Dosierung eines Additivs kontinuierlich erfolgen, sodass das Spritzgiessverfahren für diese Anwendung als kontinuierliches Verfahren in Bezug auf die Wirkungsweise der Dosiervorrichtung aufgefasst werden kann.

Alternativ dazu wird die Formmasse in einem kontinuierlichen Verfahren weiter verarbeitet, beispielsweise in einer Blasfolienextrusion, Profilextrusion, Folienextrusion, Rohrextrusion, Plattenextrusion, im Extrusionsblasformen oder in einer Schaumextrusion.

Auch in einem Kombinationsverfahren, welches ein Spritzgiessverfahren und einen Extruder umfasst, kann die erfindungsgemässe Dosiervorrichtung eingesetzt werden. Für ein derartiges Kombinationsverfahren kommt insbesondere eine sogenannte "Shot-pot" Maschine zum Einsatz, bei der es sich um eine Kombination eines Extruders mit einer Spritzgiessmaschine handelt. Mittels der Dosiervorrichtung kann insbesondere ein physikalisches Treibmittel im und/oder nach dem Extruder zudosiert werden.

Shot-pot Maschinen werden beispielsweise in folgenden Anwendungen eingesetzt: Spritzgiessen von PET Preforms, Spritzgiessen von Formteilen mit hohen Schussgewichten, Schaumpritzgiessen, IMC (injection moulding compounder).

Shot-pot Maschinen weisen unter anderem folgende Vorteile auf: der Einspritzvorgang kann sehr präzise erfolgen, da nur geringe verfahrensbedingte Leckageströme entstehen. In weiterer Folge können hohe Einspritzgeschwindigkeiten realisiert werden. Die Einspritzeinheit, umfasst in den meisten Fällen einen Kompressionsraum und/oder Volumenspeicherraum und einen Förderkolben zur Kompression und zum Ausschieben der Formmasse, durch welchen die Grösse des Kompressionsraums und/oder Volumenspeicherraums variierbar ist. Einspritzeinheit und Dosiervorrichtung sind bei Shot-pot Maschinen entkoppelt, wodurch beispielsweise beim IMC ein Doppelschneckenextruder mit hoher Plastifizierleistung und bei gleichzeitig geringen, auf die Formmasse wirkenden Scherkräften einsetzbar ist. Aus diesem Grund eignen sich Shot-pot Maschinen für Materialien, die empfindlich auf Scherkräfte reagieren. Ein weiterer Vorteil der Shot-pot Maschine liegt in ihrer Eignung zum Spritzguss von geschäumten Formteilen, dem Schaumspritzgiessen, die durch die Kombination eines Extruders mit einer Spritzgiessmaschine bedingt ist. Ein weiterer Vorteil der Verwendung eines Extruders, insbesondere eines Doppelschneckenextruders liegt darin, dass im Extruder eine Compoundierung erfolgen kann. Somit kann mit der Sshot-pot Maschine eine Kombination von Compoundierung und Verarbeitung der compoundierten Masse zu einem Formteil erfolgen. Durch die Kombination der beiden Verfahrenschritte in einer Shot-pot Maschine wird eine erhöhte Flexibilität der Herstellung von Formteilen erreicht. Die Compoundierung kann nach Bedarf erfolgen, sodass die Abhängigkeit von der Lieferung bereits compoundierter Massen wegfällt. Zudem besteht das Risiko, dass compoundierte Massen bei Lagerung Alterungsprozessen ausgesetzt sind, weil derartige Mischungen je nach Zusammensetzung nur in begrenztem Ausmass lagerfähig sind.

Für die Compoundierung wird insbesondere ein Doppelschneckenextruder eingesetzt, durch welchen geringe Scherkräfte in die zu extrudierende Masse oder die zu extrudierenden und zu mischenden Einzelkomponenten eingeleitet werden. Mittels eines Doppelschneckenextruders können vorteilhafterweise auch Faserstoffe in die Masse eingemischt werden, insbesondere Fasern, die als sogenannte Rovings vorliegen. Durch die geringen Scherkräfte wird der Bruch und somit die Verkürzung von Fasern in vermehrtem Ausmass vermieden, sodass die durchschnittliche Faserlänge gegenüber dem Stand der Technik wesentlich erhöht ist. In der Folge ergeben sich für die faserverstärkte Masse verbesserte Festigkeitswerte, da die Materialfestigkeit mit zunehmender Faserlänge zunimmt.

Nach einer vorteilhaften Ausgestaltung einer Anlage zur Herstellung von Formteilen aus mehreren, in dem in Fig. 1 dargestellten Fall, zwei Komponenten ist für jede der Komponenten ein Reservoir 1 vorgesehen, aus welchem sie über eine Fördervorrichtung 4 in eine Dosiervorrichtung eingespeist werden. Eine derartige Fördervorrichtung 4 kann als Pumpe 2 ausgeführt sein. Eine Fördervorrichtung 4 kann als Zylinder 5 ausgeführt sein, in welchem sich eine drehbare Schnecke 6 auf einem Schneckenkolben 7 befindet. Derartige Fördervorrichtungen können je nach Anzahl der Komponenten und deren physikalischen Eigenschaften, insbesondere deren Viskosität beliebig kombiniert werden. Die in Fig. 1 dargestellte Anlage kann zur Elastomerverarbeitung eingesetzt werden, wobei sie insbesondere für das Schäumen von Elastomeren verwendet werden kann. In diesem Anwendungsbeispiel kann die gesamte Fördervorrichtung Hin- und Herbewegungen ausführen, wodurch die Fördervorrichtung beliebig von den anderen Anlagenteilen an- und abkoppelbar ist. Diese Hin- und Herbewegung soll durch Pfeile 8 angedeutet werden.

Zusätzlich können Schnecke und Schneckenkolben zur verbesserten Förderung einer fluiden, viskosen, zähflüssigen oder pastösen Masse eine Oszillationsbewegung im Zylinder 5 ausführen. Zur Ausführung einer Oszillationsbewegung weist der Schneckenkolben 7 an dem Ende, an welchem sich der Eintrittsstutzen 9 des Fluids oder der pastösen Masse befindet, einen Kolben 10 mit einem relativ zum Schneckenkolbenquerschnitt vergrösserten Querschnitt auf. Die beiden gegenüberliegenden Stirnflächen des Kolbens 10 können mit einem Druckmedium wechselseitig beaufschlagt werden, wodurch eine Oszillationsbewegung im Schneckenkolben erzeugbar ist. Ein derartiger drehbarer und/oder oszillierender Schneckenkolben kommt insbesondere zum Einsatz, wenn die zu fördernde Komponente als ein zähflüssiges Fluid oder eine viskose, pastöse oder fliessfähige Masse oder als Granulat oder als Elastomerstreifen vorliegt. Ein Granulat oder ein Elastomerstreifen wird über den Vorlagebehälter 13 und ein Dosiermittel, wie beispielsweise einer Zellradschleuse 14 in den Medienraum zwischen Schneckenkolben 7 und Zylinder 5 eingebracht. Das Granulat oder der Elastomerstreifen wird zur Weiterverarbeitung aufgeschmolzen, aus diesem Grund kann der Zylinder 5 über Heizvorrichtungen 15 verfügen.

Liegt das zu fördernde Fluid bereits in flüssiger Form vor, kann auf einen Schneckenkolben verzichtet werden. Ein einfacher Förderkolben 16, der in einem Förderzylinder 17 oszillierend beweglich gelagert ist, dient der Förderung einer derartigen Komponente. Zur Temperierung und/oder zur Erlangung der Eintrittstemperatur in die Dosiervorrichtung kann der Förderzylinder mit einer Heizvorrichtung 18 ausgestattet sein.

Soll die Anlage zur Herstellung von LSR verwendet werden, handelt es sich bei den Komponenten um Polysiloxan mit einem Vernetzer, bestehend aus kurzen Polymerketten. Das Additiv umfasst insbesondere ein Treibmittel, wie $CO_2$, $N_2$, eine Kohlenwasserstoffverbindung, wie beispielsweise Pentan, oder ein Gemisch der genannten Gase.

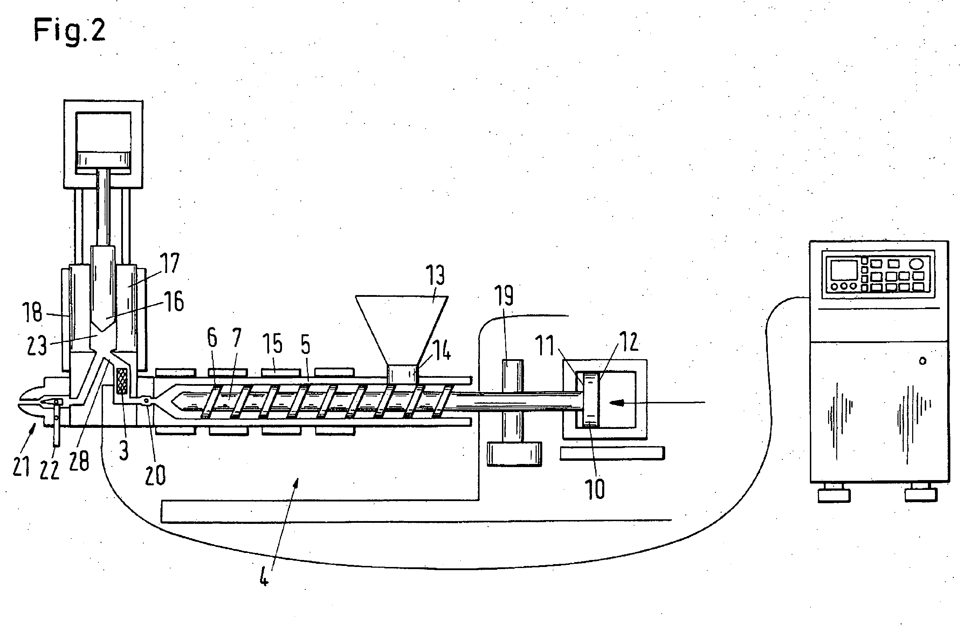

In Fig. 2 ist abweichend von Fig. 1 eine Anlage gezeigt, die eine Extrusion eines zähflüssigen oder viskosen Fluids oder die Verarbeitung eines in Granulatform vorliegenden Rohmaterials zum Gegenstand hat. Das Granulat kann selbst ein Gemisch mehrerer Komponenten darstellen. Häufig handelt es sich bei Granulaten um Polymere, die während der Extrusion nicht nur durch die Fördervorrichtung 4 gefördert werden sollen, sondern auch zumindest teilweise aufgeschmolzen werden sollen. Dazu wird das Granulat von einem Vorlagebehälter über ein Dosiermittel, wie beispielsweise eine Zellradschleuse 14 in einen Zylinder 5 gefördert, in welchem sich ein mit einer Schnecke 6 versehener Schneckenkolben 7 befindet. Der Schneckenkolben kann durch Drehmittel 19 in Rotation versetzt werden und/oder durch oszillierende Antriebsmittel, wie beispielsweise einen druckfluidbeaufschlagbaren Kolben 10, hin- und herbewegt werden. Ein derartiger Kolben weist zumeist eine gegenüber dem Schneckenkolben vergrösserte Querschittsfläche auf.

Um ein als Granulat vorliegendes Rohmaterial in geschmolzenen Zustand umzuwandeln, ist je nach der Lage des Schmelzpunktes des Granulats gegebenenfalls eine Heizvorrichtung 15 vorgesehen. Die durch den Zylinder 5 geförderte Formmasse wird anschliessend über einen optional mit einem Absperrmittel 20 versehenen Kanal in die Dosiervorrichtung 3 gefördert. Das Absperrmittel 20 kann beispielsweise ein Rückschlagventil umfassen. In der Dosiervorrichtung 3 erfolgt die Zugabe eines Additivs, wie beispielsweise eines Treibmittels, wie zu Fig. 1 bereits ausgeführt wurde. Handelt es sich bei dem einzumischenden Additiv um ein Treibmittel, sind Absperrmittel im allgemeinen vorzusehen, um eine Entmischung zu vermeiden. Durch die Verwendung von Absperrmitteln kann der Druck in der Formmasse derart geregelt werden, dass unerwünschte Entmischungen vermieden werden können, insbesondere kann die Formmasse unter einem Druck gehalten werden, bei welchem gewährleistet ist, dass das Treibmittel in gelöster Form in der Formmasse vorliegt.

Absperrmittel 20 können entfallen, wenn in der Anlage eine Vernetzung, eine Einmischung von Farben, Flammschutzmitteln oder dergleichen erfolgen soll. Derartige Zusätze verbleiben nach dem Mischvorgang in gemischtem Zustand, sodass die Funktion der Absperrmittel, einen definierten Druck in der Formmasse aufrecht zu erhalten, entfällt.

Im Gegensatz zu der in Fig. 1 dargestellten Variante wird gemäss der Ausführungsform in Fig. 2 die additivhaltige Schmelze in einem Kompressionsraum und/oder Volumenspeicherraum 23 komprimiert. Durch die Erhöhung des Drucks in der Schmelze wird vermieden, dass es zu Entmischungsvorgängen und/oder zu einer vorzeitigen Schaumbildung durch in der Schmelze enthaltenes Treibmittel kommen kann. Zur Kompression kann der in Fig. 2 dargestellte Förderkolben 16, dem auch die Funktion eines Druckausgleichskolbens zukommen kann, zum Druckaufbau in der Schmelze verwendet werden. Die komprimierte Schmelze wird sodann durch die Düse 21 ausgetragen. Die Dosiervorrichtung 3 ist in Fig. 2 zwischen Absperrmittel 20 und Kompressions/Volumenspeicherraum angeordnet. Somit kann bereits die Dosierung des Additivs, unter höherem Druck als dem Förderdruck der Schmelze im Zylinder 5 erfolgen. Durch die Anordnung eines statischen Mischelements 24 in der Dosiervorrichtung 3 wird gewährleistet, dass einerseits das zugeführte Additiv vollständig und gleichmässig mit der Formmasse vermischt wird, andererseits die Vermischung kontinuierlich und vollständig erfolgt. Nach dem Austritt aus der Dosiervorrichtung liegt eine Schmelze vor, in welcher das Additiv, also insbesondere ein gasförmiges oder leichtflüchtiges Treibmittel, in gelöster Form vorliegt. Entmischungsvorgänge bei schwer mischbaren Komponenten mit sich voneinander stark unterscheidenden physikalischen Eigenschaften können im Kompressionsraum so gut wie ausgeschlossen werden, da das Additiv durch den hohen Druck in gelöstem Zustand in der Schmelze verbleibt. Die Schmelze verlässt den Kompressionsraum 23 über die Düse 21.

Gerade bei Verwendung gasförmiger, flüssiger oder überkritischer Additive, wie z.B. physikalischen Treibmitteln, verstärkt sich die Tendenz zur Entmischung bei sinkendem Druck, da die Diffusionsgeschwindigkeit der Treibmittelbläschen zunimmt. Somit kann die Ausbildung einer geschäumten Formmasse mit einer definierten, homogenen Schaumstruktur nach Austritt der Schmelze aus der Düse durch Einstellung des Drucks und/oder der Temperatur erfolgen. In einem Extrusionsverfahren tritt die Schmelze kontinuierlich aus der Düse aus, sodass ein rohrförmiges, strangartiges oder fadenförmiges Extrusionsprodukt erhalten werden kann.

Die verwendete Anlage eignet sich auch zur Verwendung in einem der früher genannten Extrusionsverfahren. Die in Fig. 2 dargestellte Düse beinhaltet dazu eine konzentrisch im Strömungskanal angeordnete Gasdüse 22, durch welche ein Gas in die komprimierte Polymerschmelze eingetragen werden kann, sodass sich im Inneren der Polymerschmelze ein Hohlraum ausbildet, der sich nach Verlassen der Düse derart vergrössert, dass ein schlauchförmiges Produkt, das heisst ein rohrförmiges Produkt mit einem hohlen Kern, entsteht.

Wird anstatt oder zusätzlich zu der Gasdüse 22 ein Absperrmittel in der Düse 21 vorgesehen, ist die Anlage in gleicher Weise für diskontinuierliche Herstellung von Formteilen in einem Spritzgiessverfahren verwendbar.

Die aus der Dosiervorrichtung 3 austretende Formmasse wird in eine Kavität 25 eines formgebenden Werkzeugs 26 eingespritzt, wobei es zu einer Absenkung des Drucks kommt. Apparativ durchläuft die gemischte Formmasse nach dem Austritt aus der Mischeinrichtung eine Verbindungseinrichtung, mittels welcher eine Dosierung der Formmasse erfolgt. Diese Verbindungseinrichtung kann den in Fig. 2 dargestellten Förderkolben 16 umfassen, der nicht nur als Druckausgleichskolben, sondern auch zum Druckaufbau in der Schmelze stromabwärts des Absperrmittels 20 verwendet werden kann. Durch Verschiebung des Förderkolbens entsteht ein von einem definierten Schmelzevolumen auszufüllender Raum, welcher der Dosierung der Formmasse dient. Daher kann der Kolbenraum als eine für ein Spritzgiessverfahren vorgesehene Dosiervorrichtung zur Dosierung eines für das Formwerkzeug bestimmten Schmelzevolumens dienen. Diese Dosiervorrichtung kann weiters eine Düse, insbesondere eine Drosseldüse umfassen. Durch die Drosseldüse kann der eingespritzte Volumenstrom, sowie die Geschwindigkeit der Einspritzung in eine Kavität des Spritzgiess-Formwerkzeugs gesteuert werden. Die Kavität kann zur Beschleunigung der Venetzungsreaktionen beheizt werden.

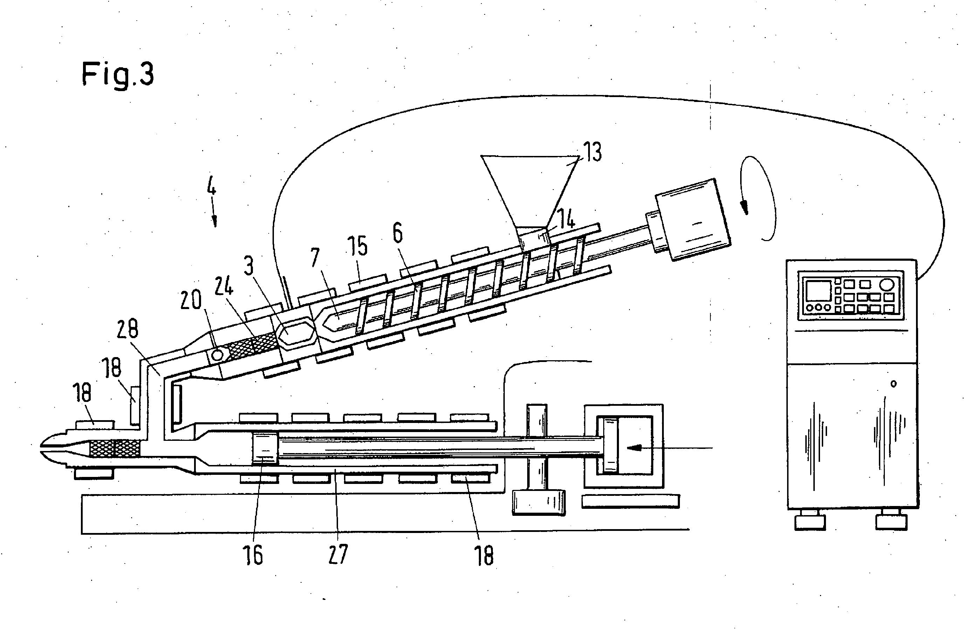

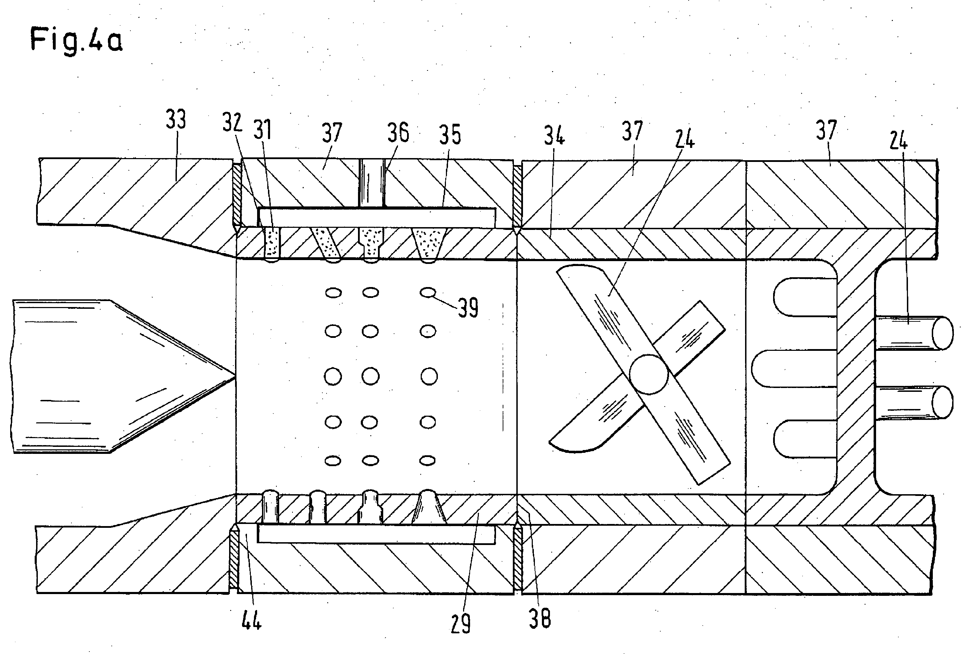

In Fig. 3 wird ein drittes Ausführungsbeispiel für eine Anlage mit einer Dosiervorrichtung für ein Additiv, insbesondere ein Treibmittel in ein flüssiges oder pastöses Medium gezeigt. Bei dem flüssigen Medium kann es sich insbesondere um eine Flüssigkeit mit hoher Viskosität, wie beispielsweise eine Polymerschmelze handeln, wobei die Polymerschmelze insbesondere in einer Anlage zur Erzeugung eines geschäumten Formteils einsetzbar ist. Eine Fördervorrichtung 4 ähnlich der in Fig. 1 dargestellten Fördervorrichtung dient der Verflüssigung eines als Granulat vorliegenden Polymers, wobei die Fördervorrichtung insbesondere als Extruder ausgebildet sein kann. Abweichend von Fig. 1 ist die Fördervorrichtung 4 zumeist nicht für eine Oszillationsbewegung ausgelegt, sondern führt eine Rotationsbewegung um die gemeinsame Achse von Zylinder und Schneckenkolben aus. Eine oszillierende Bewegung von Schnecke und/oder Schneckenkolben ist vorteilhaft, wenn eine Formmasse in eine Spritzgiessmaschine einzudosieren ist. Das verflüssigte Polymer tritt nach dem Aufschmelzen im Zylinder in eine Dosiervorrichtung 3 ein, in welcher ein Additiv zu der flüssigen oder pastösen Masse vorliegenden Schmelze beigemischt wird. Im Anschluss an die Dosiervorrichtung 3 ist zumindest ein statisches Mischelement 24 der mit dem Additiv beladenen Formmasse angeordnet, wodurch eine homogene Verteilung des Additivs im Schmelzestrom realisierbar ist. Durch das statische Mischelement werden bei geeigneter Ausführung insbesondere gemäss einer der Fig. 4a bis Fig. 7 minimale Scherkräfte in die Schmelze eingeleitet. Die aus dem Mischelement austretende Formmasse wird zur Druckerhöhung und/oder Dosierung in einen Kompressionsraum und/oder Volumenspeicherraum 23 eingeleitet, dessen Volumen durch einen hin- und her beweglichen Förderkolben 16 in einem ähnlich dem in der Fig. 2 dargestellten Förderzylinder 17 aufgebauten Einspritzzylinder 27 veränderbar ist. Zur Temperierung der Formmasse kann der Einspritzzylinder 27 zumindest über einen Teil des eingeschlossenen Volumens mit Heizvorrichtungen 18 ausgestaltet sein. Der in Fig. 3 gezeigte Verbindungskanal 28 zur Förderung der Formmasse vom Absperrmittel 20 bis in den Kompressionsspeicheraum und/oder Volumenspeicherraum kann ebenfalls mit einer Heizvorrichtung 18 versehen sein, wenn über die Kanallänge ein signifikanter Temperaturabfall der Formmasse feststellbar ist. Die gesamte Fördervorrichtung 4 kann auch nach Inbetriebnahme einer Spritzgiessmaschine oder eines Extruders nachgerüstet werden. Auch die Dosiervorrichtung 3 sowie jedes Mischelement 24 können in gleicher Weise nachgerüstet werden, da der Zylinder 5 mit der zugehörigen Schnecke 6, die Dosiervorrichtung 3 und jedes Mischelement ein eigenständiges Modul darstellt. Zudem können Fördervorrichtung 4 und Dosiervorrichtung 3 für eine weitere zu dosierende Komponente auch nachträglich an einen Verbindungskanal 28 angebracht werden, der als sogenanntes Schlafrohr ausgebildet ist. Als Schlafrohr wird im allgemeinen ein Verbindungskanal oder Verbindungsrohr bezeichnet, welches keine verfahrenstechnische Aufgabe im laufenden Prozess erfüllt. Alternativ dazu ist es möglich, das Konzept der Modularität auch auf den Verbindungskanal 28 auszudehnen, sodass der Verbindungskanal 28 in einfacher Weise durch einen Verbindungskanal mit zumindest einem zusätzlichen Anschlussstutzen austauschbar ist. An einem derartigen Anschlussstutzen können dann beliebige Kombinationen der oben genannten Module angedockt werden.

In Fig. 4a ist ein Längsschnitt eines ersten Ausführungsbeispiels einer Dosiervorrichtung von Additiven zu zähflüssigen oder viskosen Fluiden oder pastösen Massen gezeigt. Die Dosiervorrichtung 3 umfasst einen ersten, die fluide oder fliessfähige pastöse Masse aufnehmenden, Kanalabschnitt 29, wobei das Fluid den Kanalabschnitt 29 durchströmt. Der fluidaufnehmende Kanalabschnitt 29 kann ein insbesondere als Rohr ausgestalteter Kanalabschnitt sein. Der durchströmte oder fluidaufnehmende Kanalabschnitt 29 enthält zumindest ein Dosierelement 31. Der fluidaufnehmende Kanalabschnitt besteht aus einem Werkstoff mit guten Festigkeitseigenschaften. Mehrere derartige Kanalabschnitte können hintereinander geschaltet sein, wenn verschiedene Additive zugemischt werden sollen. Jeder der genannten Kanalabschnitte 29 kann eine Ausnehmung 32 zur Aufnahme des Dosierelements 31 enthalten, wobei die Ausnehmung allseitig von dem Werkstoff des Kanalabschnitts 29 begrenzt ist und das Dosierelement in der Ausnehmung gehalten wird. In der Dosiervorrichtung 3 erfolgt die Imprägnierung zumindest einer der Komponenten der fluiden oder fliessfähigen pastösen Masse mit einem Additiv, beispielsweise einem Treibmittel, insbesondere einem physikalischen Treibmittel. Das Additiv wird unter Druck in die Dosiervorrichtung über zumindest einen Kanal 36 zur Additivzufuhr eingespeist. Die Dosiervorrichtung 3 umfasst einen Strömungskanal 35, der insbesondere als Ringkanal ausgebildet sein kann und der Verteilung des über Kanal 36 zugeführten Additivs auf den Kanalabschnitt 29 dient. Der Strömungskanal 35 ist als Ausnehmung an der Innenwand des Gehäuseabschnitts 37 ausgestaltet oder als Ausnehmung auf der Aussenwand des Kanalabschnitts 29 angebracht, wobei der Gehäuseabschnitt den Kanalabschnitt 29 vollumfänglich umschliesst. Der Gehäuseabschnitt 37 ist mit Vorsprüngen 44 ausgestattet, die sich auf dem Kanalabschnitt 29 fluiddichtend abstützen. Nicht dargestellt sind in den Vorsprüngen 44 gegebenenfalls erforderliche Dichtungselemente, wobei alternativ auch eine Fügverbindung insbesondere durch eine dichtende Schweissverbindung oder Lötverbindung vorsehbar ist. Das durch den Kanal 36 in den Ringkanal 35 eingespeiste Additiv tritt anschliessend über die Dosierelemente 31 in den von der fluiden oder pastösen Masse durchströmten Strömungskanal ein, der von dem Kanalabschnitt 29 umschlossen ist. Das Additiv tritt dann durch eine poröse Oberfläche, die bei niedrigen Drücken auch als poröse Hülse, insbesondere als poröser Zylinder gemäss EP06405123.8 ausgestaltet sein kann, bei höheren Drücken, die insbesondere bei einem Verfahren zur Verarbeitung von LSR bei maximal 300 bar, bevorzugt bei maximal 200 bar liegen, als der vorhin beschriebene Kanalabschnitt 29 mit Dosierelementen ausgeführt sein kann, in Kontakt mit der fluiden oder pastösen Masse, welche im Inneren des Kanalabschnitts 29 strömt. Auf mögliche konstruktive Ausgestaltungen der Dosiervorrichtung soll in der Folge noch im Detail eingegangen werden. Zur besseren und schnelleren Durchmischung und Homogenisierung des Gemisches aus fluider, viskoser oder pastöser Masse und Additiv kann der Kanalabschnitt 29 oder ein benachbarter Kanalabschnitt (33, 34) ein statisches Mischelement 24 enthalten. Das Mischelement kann sich, wie in Fig. 4a dargestellt ist, in zumindest einem stromabwärts zu dem Kanalabschnitt 29 gelegenen Kanalabschnitt 34 befinden. Mehrere Kanalabschnitte 29 können mit entsprechenden Gehäuseabschnitten 37 in beliebiger Folge, die an die jeweilige Mischungsaufgabe angepasst ist, beliebig aneinandergereiht werden, da auch sie modular aufgebaut sind. In Fig. 4a ist dargestellt, dass anschliessend an den Imprägnierungsschritt, das heisst, der Zufuhr des Additivs zur strömenden fluiden oder pastösen Masse, der in der eben beschriebenen Dosiervorrichtung durchgeführt wurde, die so entstandene Formmasse in einen stromabwärts gelegenen Kanalabschnitt 34 gefördert wird, der das statische Mischelement 24 enthält. Im statischen Mischelement kann der Formmassenstrom geteilt, wieder zusammengeführt und durch Hintereinanderschaltung zumindest eines weiteren Mischelements, welches gegenüber dem vorhergehenden Mischelement um einen Winkel gedreht ist, umgelagert werden. Durch mehrere, hintereinander im Formmassenstrom angeordnete Mischelemente 24, die jeweils zueinander winkelversetzt angeordnet sind, erfolgt eine Homogenisierung des Additivs in der Formmasse, sodass nach Austritt aus der Mischstrecke eine gleichmässig mit Additiv beladene Formmasse vorliegt. Eine besonders gute Homogenisierung ist mit zueinander in einem Winkel von 90° versetzten Mischelementen erzielt worden. Das statische Mischelement 24 kann als Teil eines Kanalabschnitts (29,33,34) ausgebildet sein, insbesondere sind das Mischelement sowie der Kanalabschnitt als ein Gussteil ausgebildet, geschweisst, gelötet oder formschlüssig verbunden.

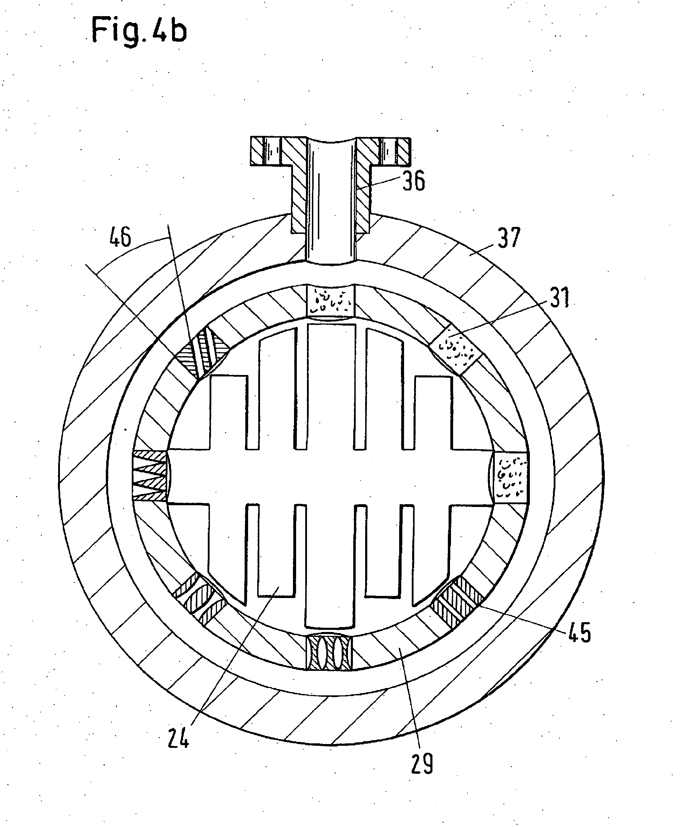

Fig. 4b ist ein Schnitt durch die Anordnung von Fig. 4a entlang einer normal zur Hauptströmungsrichtung gelegenen Ebene. In Fig. 4b sind insbesondere Dosierelemente 31 mit kapillarartigen Öffnungen 45 gezeigt. Derartige kapillarartige Öffnungen reichen vom Ringkanal 36 bis zum Strömungskanal, in welchem sich die zu beladende fluide oder pastöse Masse befindet. In Fig. 4b sind verschiedene mögliche Ausgestaltungen der kapillarartigen Öffnungen gezeigt, nämlich mit über die Kanallänge der Öffnung im wesentlichen gleichbleibenden Querschnitt, mit sich verengenden und/oder erweiternden Querschnitten, wobei insbesondere düsenförmige Querschnitte zum Eintrag mit erhöhter Strömungsgeschwindigkeit führen. Querschnitte, die mit zentraler oder randseitiger Erweiterung ausgebildet sind, können den Eintrag des Additivs in Tröpfchenform begünstigen. Die Ausführung der Öffnungen soll nicht auf die beispielhaft gezeigten Ausführungsformen beschränkt sein. Insbesondere können Kapillaröffnungen vorgesehen sein, deren Achse nicht normal zur Hauptströmungsrichtung steht, sondern in einem Winkel 46 geneigt ist. Durch eine Neigung in der in Fig. 4b dargestellten Schnittebene kann ein tangentialer Eintrag des Additivs erfolgen, alternativ dazu oder zusätzlich kann eine Neigung der Achse der Öffnung 45 oder des gesamten Dosierelements 31 relativ zur Hauptströmungsrichtung vorgesehen sein, wie in Fig. 4a gezeigt wurde. Insbesondere können für diese Kapillaren Kristalle mit Nanokapillaren zum Einsatz kommen.

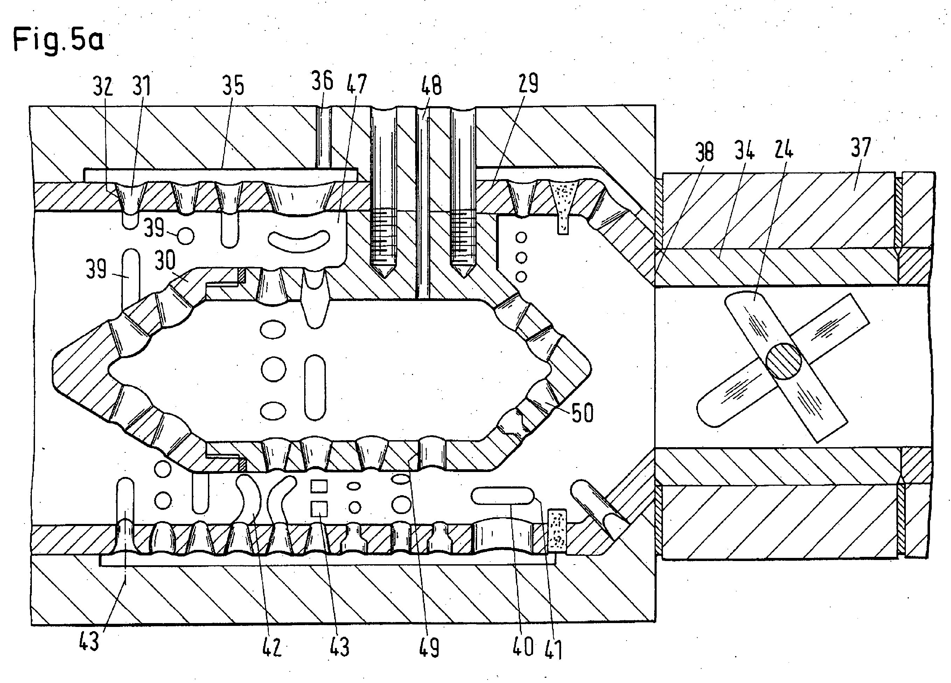

Fig. 5a zeigt ein Ausführungsbeispiel einer Dosiervorrichtung mit einem Strömungskanal für eine fluide, viskose oder pastöse Masse der als Ringspalt 47 ausgebildet ist. Der Ringspalt 47 wird durch einen fluidumströmten Kanalabschnitt 30 gebildet, der in dem fluidaufnehmenden Kanalabschnitt 29 eingebaut ist. Die Dosiervorrichtung 3 umfasst einen ersten, die fluide, viskose oder fliessfähige pastöse Masse aufnehmenden, Kanalabschnitt 29, wobei das Fluid den Kanalabschnitt 29 durchströmt und einen weiteren Kanalabschnitt 30, der von der fluiden oder fliessfähigen, viskosen pastösen Masse umströmbar ist. Der fluidaufnehmende Kanalabschnitt 29 kann ein insbesondere als Zylinderrohr ausgestalteter Kanalabschnitt sein. Der fluidumströmte Kanalabschnitt 30 kann insbesondere einen dem fluidaufnehmenden Kanalabschnitt 29 entsprechenden Querschnittsverlauf aufweisen, sodass die Strömungsgeschwindigkeit im Ringspalt im wesentlichen konstant ist. Der durchströmte und /oder der umströmte Kanalabschnitt (29,30) enthalten zumindest ein Dosierelement 31. Der fluidaufnehmende, sowie der fluidumströmte Kanalabschnitt bestehen aus einem druckbeständigen Werkstoff. Jeder der genannten Kanalabschnitte (29,30) kann eine Ausnehmung 32 zur Aufnahme des Dosierelements enthalten, wobei die Ausnehmung allseitig von dem Werkstoff des Kanalabschnitts (29,30) begrenzt ist und das Dosierelement in der Ausnehmung gehalten wird. In der Dosiervorrichtung 3 erfolgt die Imprägnierung zumindest einer der Komponenten der fluiden oder fliessfähigen pastösen Masse mit einem Additiv, insbesondere einem physikalischen Treibmittel. Das Additiv wird unter Druck in die Dosiervorrichtung 3 über zumindest einen Kanal 36 zur Additivzufuhr eingespeist. Die Dosiervorrichtung 3 umfasst einen Strömungskanal 35, der insbesondere als Ringkanal ausgebildet sein kann und der Verteilung des über Kanal 36 zugeführten Additivs auf den Kanalabschnitt 29 dient. Der Strömungskanal 35 ist wie in Fig. 4a als Ausnehmung an der Innenwand des Gehäuseabschnitts 37 ausgestaltet, wobei der Gehäuseabschnitt den Kanalabschnitt 29 vollumfänglich umschliesst. Ein weiterer Kanal 48 ist vorgesehen, um Additiv in das Innere des Kanalabschnitts 30 zu fördern. Das durch den Kanal 36, in den Ringkanal 35 sowie über Kanal 48 in einen Hohlraum 49 des Kanalabschnitts 30 eingespeiste Additiv tritt anschliessend über die Dosierelemente 31 in den von der fluiden oder pastösen Masse durchströmten Strömungskanal, der von dem Kanalabschnitt 29 umschlossen ist. In Fig. 5a sind beispielhaft verschiedene Möglichkeiten zur Gestaltung der Dosierelemente und der Ausnehmungen aufgezeigt. Die Auswahl des Dosierelements in der geeigneten Form kann je nach verwendetem Additiv variieren. Die Verwendung von Formen mit im wesentlichen kreisförmigen Eintrittsquerschnitt 39 kommen für insbesondere für gasförmige oder leichtflüchtige Additive zum Einsatz, die gleichmässig über die gesamte Oberfläche des Kanalabschnitts in die fluide oder pastöse Masse eingebracht werden sollen. Mit ihren relativ zur Oberfläche des Kanalabschnitts kleinen Abmessungen wird der Grundwerkstoff des Kanalabschnitts nicht wesentlich verschwächt, sodass sich diese Ausführungsform insbesondere bei Hochdruckverfahren mit Drücken bis zu 1000 bar eignet. Von Wichtigkeit ist dabei, dass im Gegensatz zu einer Siebstruktur, wie sie in einem vollständig aus porösem Material ausgebildeten Kanalabschnitt, d.h. einer porösen Hülse auftritt, die Dosierelemente einen zumindest gleich grossen Abstand voneinander haben, wie ihr Maximaldurchmesser beträgt. Vorteilhafterweise beträgt der Abstand zweier benachbarter Dosierelemente das 1 bis 1,8-fache ihres Durchmessers, insbesondere das 1 bis 1,6-fache des Durchmessers, besonders bevorzugt das 1 bis 1,5-fache des Durchmessers.

Nach einer weiteren Ausführungsform weist das Dosierelement einen Eintrittsquerschnitt 39, der eine Längsseite 40 und eine Breitseite 41 auf, wobei das Verhältnis der Längen der Längsseite 40 zu der Breitseite 41 zumindest 1,25 beträgt. Die Verwendung derartiger Dosierelemente eignet sich insbesondere für Anwendungen, in denen das Additiv mit einer minimalen Anzahl von Dosierelementen 31 in die fluide, viskose oder pastöse Masse eingebracht werden soll. Für den Eintrag desselben Volumenstroms and Additiven werden somit weniger Dosierelemente 31 benötigt. Diese Variante ist kostengünstiger, weil einfacher herzustellen und eignet sich insbesondere für Anwendungen bei geringen Drücken bis zu mittleren Drücken.

Nach einer weiteren Variante weist das Dosierelement einen Eintrittsquerschnitt 39 auf, der abschnittweise konvexe und/oder konkave Randkurven 42 und/oder abschnittweise gerade Längsseiten 40 umfasst. Mit einem derartigen Dosierelement kann eine grössere Oberfläche als bei der erstgenannten Variante vom Dosierelement abgedeckt werden. Die Verwendung von bananenförmigen Dosierelementen wird zudem eine bessere Haltbarkeit der Dosierelemente bei mittleren bis höheren Drücken (ca. 30 bis 50 bar) beobachtet, als bei Dosierelementen nach der vorhergehenden Variante, wenn als Bezugsgrösse die von den Dosierelementen abgedeckte Oberfläche verwendet wird.

Das Dosierelement 31 weist vorteilhafterweise eine porenförmige oder kapillarartige Struktur auf. Ein derartiges Dosierelement 31 kann entweder kraftschlüssig mittels einer Presspassung in der Ausnehmung 32 gehalten werden oder formschlüssig durch die geometrische Ausgestaltung der Ausnehmung 32, in die das Dosierelement mit der entsprechenden geometrischen Gegenform eingepasst wird und/oder stoffschlüssig (das heisst insbesondere durch eine Schweiss- oder Lötverbindung) mit dem Kanalabschnitt (29,30) verbunden sein. Der Querschnitt ist in einem Schnitt parallel zur Hauptachse des Dosierelements 31 zylinderförmig, konisch, abschnittsweise zylinderförmig und/oder konisch mit sich abschnittsweise unterscheidenden Durchmessern ausgebildet.

Ein wesentlicher Gesichtspunkt ist die Notwendigkeit, die Dosierelemente nicht in der Nähe der Verbindungen 38 anzuordnen, die benachbarte Kanalausschnitte miteinander unlöslich verbinden. Jede Anordnung im Bereich der Verbindungen hat eine Verschwächung der Verbindung zur Folge. Handelt es sich um Schweissnähte, besteht einerseits das Problem, dass die Dosierelemente aus einem anderen Werkstoff bestehen können, als der Kanalabschnitt (29,33,34), sodass eine Schweissverbindung schon aufgrund der Werkstoffpaarung schwierig herstellbar ist. Zudem sind poröse oder mit Kapillarkanälen versehene Dosierelemente an und für sich als Bauelemente anzusehen, die aufgrund der inherenten Verschwächungen über verminderte Festigkeit verfügen. Wenn ein derartiges Dosierelement durch ein Schweissverfahren zusätzliche Spannungen aufnehmen muss, können sich bereits zu diesem Zeitpunkt Mikrorisse im Dosierelement ausbilden. Im Betrieb kommen zusätzliche Spannungen durch den Druck der Formmasse hinzu. Wird zudem ein Schneckenkolben, insbesondere ein oszillierender Schneckenkolben, zur Förderung der fluiden oder pastösen Masse eingesetzt, kommt es zusätzlich zu periodischen Spannungsschwankungen, die in die Schweissnähte eingeleitet werden. Diese Dauerwechselbelastung führt zur Rissausbreitung und zum Versagen des Kanalabschnitts, insbesondere wenn Formmassen unter hohen Drücken zu verarbeiten sind. Aus diesem Grund sollte der Anteil der Oberfläche des Kanalabschnitts, der von Dosierelementen eingenommen wird, bei einem maximalen Betriebsdruck von 1000 bar 20% nicht überschreiten.

Insbesondere wurden bisher die folgenden Konfigurationen konstruktiv realisiert und bei einem maximalen Betriebsbdruck von 1000 bar getestet:

| | 1 | 2 | 3 | 4 |
|---|---|---|---|---|
| Stiftoberfläche (mm$^2$) | 613,3 | 1070,9 | 1698 | 2221,9 |
| Hülsenoberfläche (mm$^2$) | 4021,2 | 5805,6 | 8625,6 | 12271 |
| Stiftdurchmesser (mm) | 5,2 | 7,5 | 8,8 | 10,8 |
| Abs. Stiftabstand min. (mm) | 7,26 | 7,51 | 10 | 12,12 |
| Abs. Stiftabstand max. (mm) | 9,41 | 10,25 | 13,38 | 16,06 |
| Anteil Stiftoberfläche an Hülsenoberfläche (%) | 15,25 | 18,43 | 19,68 | 18,1 |
| Verhältnis von abs. Stiftabstand zu Stiftdurchmesser | 1,4-1,8 | 1,0-1,37 | 1,14-1,52 | 1,12-1,49 |

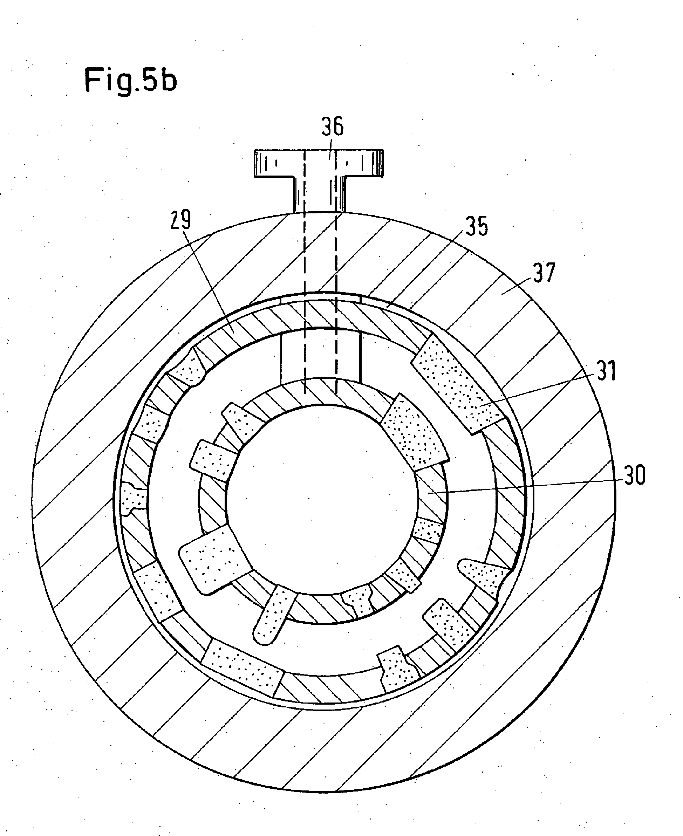

Fig. 5b ist ein Schnitt durch die Anordnung von Fig. 5a entlang einer normal zur Hauptströmungsrichtung gelegenen Ebene. In Fig. 5b sind insbesondere Dosierelemente 31 gezeigt, die in das Innere des die fluide oder pastöse Masse enthaltenden Strömungskanals ragen. Mittels derartiger Dosierelemente wird bereits ein Eintrag von Additiv in einen breiteren Randbereich erreicht, sodass eine Formmasse mit einer hohen Additivkonzentration in einem breiteren Randbereich erhalten wird. Zusätzlich können die Dosierelemente im Strömungskanal versetzt hintereinander angeordnet werden, oder Dosierelemente in zumindest zwei verschiedenen Ausführungen hintereinander angeordnet werden, wie beispielsweise in Fig. 4a, Fig. 4b, Fig. 5a, Fig. 5b, Fig. 6, Fig. 7 dargestellt. Nicht dargestellt ist in Fig. 5b, ein Mischelement im Strömungskanal zwischen dem Kanalabschnitt 29 und dem Kanalabschnitt 30 anzuordnen. Ein derartiges Mischelement kann beispielsweise ähnlich der in der EP1153650 A1 ausgeführten Mischelemente ausgestaltet sein.

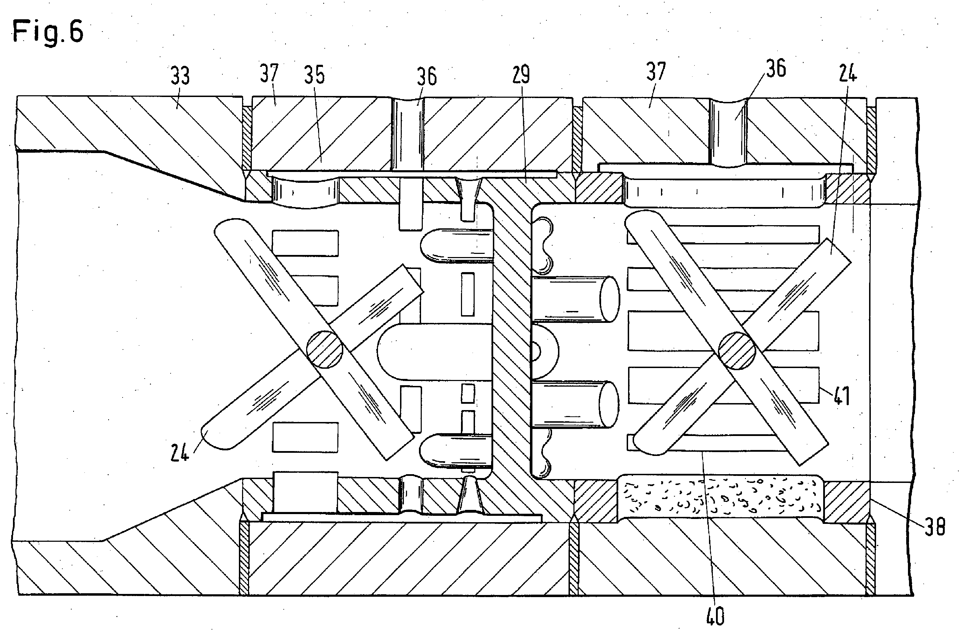

Fig. 6 zeigt einen Längsschnitt durch ein weiteres Ausführungsbeispiel für eine Dosiervorrichtung mit Dosierelementen mit länglicher Struktur und Mischelementen, die in der Dosiervorrichtung angeordnet sind. Auf die Funktion von Bauelementen, die bereits in den vorhergehenden Abbildungen beschrieben worden sind, soll an dieser Stelle nicht mehr im Detail eingegangen werden. Mit Hilfe des in Fig. 6 dargestellten Ausführungsbeispiels ist es möglich, die Mischstrecke zu verkürzen. Zudem können auch Dosierelemente vorgesehen werden, die in den Innenraum des Strömungskanals ragen, sodass eine zusätzliche Vermischung von Additiv und fluider oder pastöser Masse insbesondere in den Strömungsrandbereichen erfolgen kann.

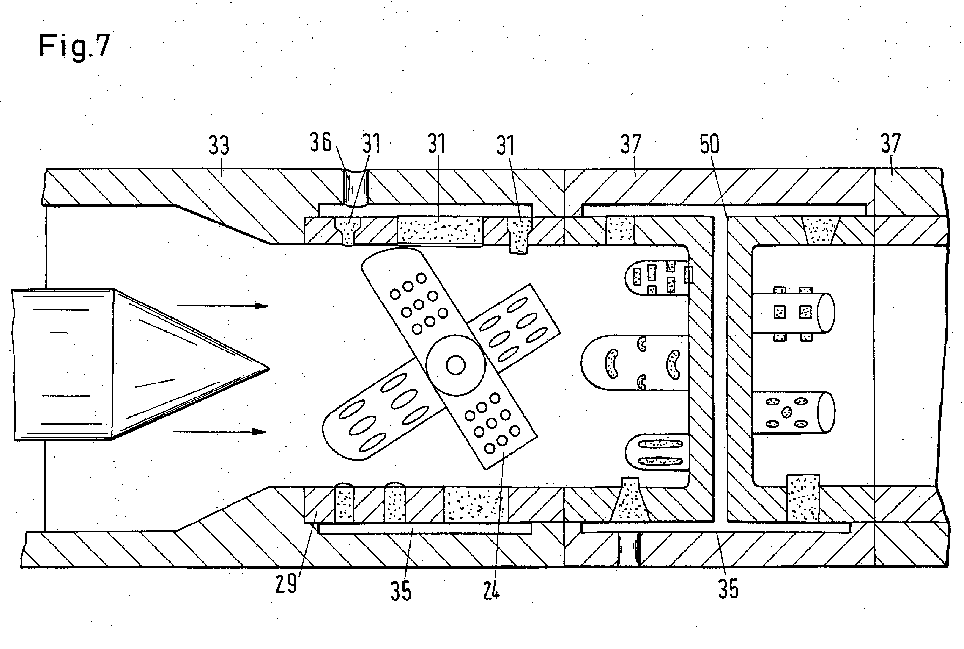

Fig. 7 zeigt ein Dosierelement, das in ein Mischelement integriert ist. Die in Fig. 4a, Fig. 4b, Fig. 5a, Fig. 6 dargestellten Mischelemente 24 werden mit einem Verteilerkanal 50 versehen, der sich als Bohrung im Inneren des Mischelements befindet. Die Lösung gemäss Fig. 7 ist geeignet, um ein Additiv gleichmässig mit sofortiger Mischwirkung insbesondere in einen Strömungskanal grossen Durchmessers einzutragen.

Eine weitere, hier nicht im Detail dargestellte Möglichkeit kann bei Strömungskanälen grossen Durchmessers zum Einsatz kommen. Die Strömung wird auf in mehrere parallel zueinander verlaufende Teilkanäle aufgespalten, worauf beispielsweise in der noch unveröffentlichten EP06405129.5 bereits eingegangen wurde, die hiermit in ihrer Gesamtheit als integrierender Bestandteil dieser Anmeldung aufgenommen wird.

Bezugszeichenliste

1. Reservoir
2. Pumpe

3.  Dosiervorrichtung
4.  Fördervorrichtung
5.  Zylinder
6.  Schnecke
7.  Schneckenkolben
8.  Pfeil
9.  Eintrittsstutzen
10. vergrösserter Querschnitt
11. Stirnfläche
12. Stirnfläche
13. Vorlagebehälter
14. Zellradschleuse
15. Heizvorrichtung
16. Förderkolben
17. Förderzylinder
18. Heizvorrichtung
19. Drehmittel
20. Absperrmittel
21. Düse
22. Gasdüse
23. Kompressions- oder Volumenspeicherraum
24. Mischelement
25. Kavität
26. Formgebendes Werkzeug
27. Einspritzzylinder
28. Verbindungskanal
29. Kanalabschnitt (fluidaufnehmend)
30. Kanalabschnitt (fluidumströmt)
31. Dosierelement
32. Ausnehmung
33. stromaufwärts angeordneter Kanalabschnitt
34. stromabwärts angeordneter Kanalabschnitt
35. Ringkanal
36. Kanal für Additivzufuhr
37. Gehäuseabschnitt
38. Verbindung
39. Eintrittsquerschnitt
40. Längsseite
41. Breitseite
42. Randkurve
43. Hauptachse des Dosierelements
44. Vorsprung
45. kapillarartige Öffnung
46. Winkel
47. Ringspalt
48. Kanal
49. Hohlraum
50. Verteilerkanal

**Patentansprüche**

1.  Dosiervorrichtung (3) zum Eintrag von Additiven zu einem zähflüssigen Fluid oder einer viskosen, fliessfähigen pastösen Masse, insbesondere einer Kunststoffschmelze, umfassend einen das Fluid aufnehmenden Kanalabschnitt (29), wobei das Fluid den fluidaufnehmenden Kanalabschnitt (29) durchströmt, wobei der fluidaufnehmende Kanalabschnitt 29 in einem als Ringkanal ausgebildeten Strömungskanal 35 angeordnet ist, wobei der durchströmte fluidaufnehmende Kanalabschnitt (29) zumindest ein Dosierelement (31) enthält, **dadurch gekennzeichnet, dass** der fluidaufnehmende Kanalabschnitt (29), als Rohr ausgebildet ist, wobei der fluidaufnehmende Kanalabschnitt (29)eine Ausnehmung (32) zur Aufnahme des Dosierelements (31) enthält, wobei die Ausnehmung (32) vollumfänglich vom Kanalabschnitt (29) begrenzt ist und das Dosierelement (31) in der Ausnehmung (32) gehalten wird.

2. Dosiervorrichtung nach Anspruch 1 wobei ein weiterer Kanalabschnitt (30) vorgesehen ist, der von dem Fluid umströmbar ist und zumindest ein Dosierelement (31) enthält.

3. Dosiervorrichtung (3) nach Anspruch 2, wobei zumindest ein weiterer vorhergehender Kanalabschnitt stromaufwärts an den das Fluid aufnehmenden Kanalabschnitt angrenzt, sowie zumindest ein weiterer nachfolgender Kanalabschnitt stromabwärts an den das Fluid aufnehmenden Kanalabschnitt angrenzt und der Kanalabschnitt mit den angrenzenden Kanalabschnitten mit einer unlösbaren Verbindung (38) verbindbar ist.

4. Dosiervorrichtung (3) nach Anspruch 3, wobei die Verbindung (38) eine Schweissverbindung umfasst.

5. Dosiervorrichtung (3) nach Anspruch 1, wobei im von den Kanalabschnitten (29, 30) begrenzten Strömungsraum zumindest ein statisches Mischelement (24) vorsehbar ist.

6. Dosiervorrichtung (3) nach Anspruch 5, wobei das statische Mischelement (24) als Teil eines Kanalabschnitts (29,33,34) ausgebildet ist, insbesondere das Mischelement sowie der Kanalabschnitt als Gussteil ausgebildet sind oder durch eine Schweissverbindung, Lötverbindung oder formschlüssig verbindbar sind.

7. Dosiervorrichtung (3) nach einem der vorhergehenden Ansprüche, wobei das Dosierelement (31) einen im wesentlichen kreisförmigen Eintrittsquerschnitt (39) aufweist.

8. Dosiervorrichtung (3) nach einem der Ansprüche 1 bis 6, wobei das Dosierelement einen Eintrittsquerschnitt (39) aufweist, der eine Längsseite (40) und eine Breitseite (41) aufweist, wobei das Verhältnis der Längen der Längsseite (40) zu der Breitseite (41) zumindest 1,25 beträgt.

9. Dosiervorrichtung (3) nach einem der vorhergehenden Ansprüche, wobei das Dosierelement einen Eintrittsquerschnitt (39) aufweist, der abschnittweise konvexe und/oder konkave Randkurven (42) und/oder abschnittweise gerade Längsseiten (40) aufweist.

10. Dosiervorrichtung (3) nach einem der vorhergehenden Ansprüche, wobei das Dosierelement (31) eine porenförmige oder kapillarartige Struktur aufweist.

11. Dosiervorrichtung (3) nach einem der vorhergehenden Ansprüche, wobei der Querschnitt in einem Schnitt parallel zur Hauptachse des Dosierelements (31) zylinderförmig, konisch, abschnittsweise zylinderförmig und/oder konisch mit sich abschnittsweise unterscheidenden Durchmessern ausgebildet ist.

12. Dosiervorrichtung (3) nach einem der vorhergehenden Ansprüche, wobei das Dosierelement (31) in das Innere des Strömungskanals hineinragt.

13. Dosiervorrichtung (3) nach einem der vorhergehenden Ansprüche, wobei zwei benachbarte Dosierelemente (31) einen Abstand voneinander aufweisen, der zumindest gleich gross wie ihr minimaler Durchmesser ist, vorteilhafterweise das 1 bis 1,8-fache des minimalen Durchmessers des Dosierelements beträgt, insbesondere das 1 bis 1,6-fache dieses Durchmessers, besonders bevorzugt das 1 bis 1,5-fache dieses Durchmessers beträgt.

14. Dosiervorrichtung (3) nach einem der vorhergehenden Ansprüche, wobei der Anteil der Oberfläche des Kanalabschnitts (29,30), der von Dosierelementen (31) eingenommen wird, bei einem maximalen Betriebsdruck 1000 bar maximal 20% beträgt.

**Claims**

1. A metering device (3) for the feeding of additives to a gooey fluid or a viscous, flowable pasty composition, in particular to a plastic melt, including a passage section (29) receiving the fluid, with the fluid flowing through the fluid receiving passage section (29), whereby the fluid receiving passage section (29) is arranged in a flow passage (35) formed as an annular passage with the passage section (29) through which flow takes place containing at least one metering element (31), **characterised in that** the fluid receiving passage section (29) is formed as a tube, whereby the fluid receiving passage section (29) contains a recess (32) for the reception of the metering element (31), with the recess (32) being bounded over the full periphery by the passage section (29) and the metering element (31) being held in the recess (32).

2. A metering device (3) in accordance with claim 1, wherein a further passage section (30) is foreseen, around which flow takes place and which contains at least one metering element (31).

3. A metering device (3) in accordance with claim 2, wherein at least one further preceding passage section adjoins the passage section receiving the fluid upstream as well as least one further subsequent passage section adjoins the passage section receiving the fluid downstream and the passage section can be connected to the adjoining passage sections by an unreleasable connection (38).

4. A metering device (3) in accordance with claim 3, wherein the connection (38) includes a weld connection.

5. A metering device (3) in accordance with claim 1, wherein at least one static mixing element (24) can be provided in the flow space bounded by the passage sections (29, 30).

6. A metering device (3) in accordance with claim 5, wherein the static mixing element (24) is made as part of a passage section (29, 33, 34), in particular wherein the mixing element and the passage section are made as a cast part or can be connected by a weld connection, a solder connection or in a shape matched manner.

7. A metering device (3) in accordance with any one of the preceding claims, wherein the metering element (31) has a substantially circular feed cross-section (39).

8. A metering device (3) in accordance with any one of the claims 1 to 5, wherein the metering element has a feed cross-section (39) which has a longitudinal side (40) and a wide side (41), with the ratio of the lengths of the longitudinal side (40) to the wide side (41) amounting to at least 1.25.

9. A metering device (3) in accordance with any one of the preceding claims, wherein the metering element has a feed cross-section (39) which has convex and/or concave marginal curves (42) sectionally and/or straight longitudinal sides (40) sectionally.

10. A metering device (3) in accordance with any one of the preceding claims, wherein the metering element (31) has a porous or capillary-like structure.

11. A metering device (3) in accordance with any one of the preceding claims, wherein the cross-section is made cylindrical, conical, sectionally cylindrical and/or conical with sectionally different diameters in a section parallel to the main axis of the metering element (31).

12. A metering device (3) in accordance with any one of the preceding claims, wherein the metering element (31) projects into the interior of the flow passage.

13. A metering device (3) in accordance with any one of the preceding claims, wherein two adjacent metering elements (31) have a spacing from one another which is at least the same size as their minimum diameter, advantageously 1 to 1.8 times the minimum diameter of the metering element, in particular 1 to 1.6 times this diameter, particularly preferably 1 to 1.5 times this diameter.

14. A metering device (3) in accordance with any one of the preceding claims, wherein the portion of the surface of the passage section (29, 30) which is taken up by metering elements (31) amounts to a maximum of 20% at a maximum operating pressure of 1000 bar.

**Revendications**

1. Dispositif de dosage (3) destiné à introduire des additifs dans un fluide semi-liquide ou une matière visqueuse, pâteuse apte à couler, en particulier une matière plastique en fusion, comportant un tronçon de conduit (29) recevant le fluide, sachant que ledit fluide circule à travers le tronçon de conduit (29) recevant le fluide, ledit tronçon de conduit (29) recevant le fluide étant disposé dans un conduit de circulation (35) réalisé sous la forme d'un conduit annulaire, sachant que le tronçon de conduit (29) recevant le fluide et traversé par celui-ci contient au moins un élément de dosage (31), **caractérisé en ce que** le tronçon de conduit (29) recevant le fluide, est réalisé sous la forme d'un tube, ledit tronçon de conduit (29) recevant le fluide comportant un évidement (32) destiné à recevoir l'élément de dosage (31), ledit évidement (32) étant délimité sur tout son pourtour par le tronçon de conduit (29), et l'élément de dosage (31) est maintenu dans l'évidement (32).

2. Dispositif de dosage selon la revendication 1, dans lequel il est prévu un tronçon de conduit (30) supplémentaire, autour duquel circule le fluide et qui contient au moins un élément de dosage (31).

3. Dispositif de dosage (3) selon la revendication 2, dans lequel au moins un tronçon de conduit antérieur supplémentaire est adjacent du côté amont au tronçon de conduit recevant le fluide, et au moins un tronçon de conduit postérieur supplémentaire est adjacent du côté aval au tronçon de conduit recevant le fluide, et le tronçon de conduit peut être relié aux tronçons de conduit adjacents par une liaison (38) inamovible.

4. Dispositif de dosage (3) selon la revendication 3, dans lequel la liaison (38) comporte un assemblage soudé.

5. Dispositif de dosage (3) selon la revendication 1, dans lequel au moins un élément mélangeur (24) statique peut être prévu dans l'espace de circulation délimité par les tronçons de conduit (29, 30).

6. Dispositif de dosage (3) selon la revendication 5, dans lequel l'élément mélangeur (24) statique est réalisé sous la forme d'un partie d'un tronçon de conduit (29, 33, 34), en particulier l'élément mélangeur et le tronçon de conduit sont réalisés sous la forme d'une pièce en fonte ou peuvent être assemblés par un assemblage soudé, un assemblage brasé ou par conjugaison de forme.

7. Dispositif de dosage (3) selon l'une quelconque des revendications précédentes, dans lequel l'élément de dosage (31) comporte une section d'admission (39) sensiblement circulaire.

8. Dispositif de dosage (3) selon l'une quelconque des revendications 1 à 6, dans lequel l'élément de dosage comporte une section d'admission (39), qui comporte une face longitudinale (40) et une face en largeur (41), le rapport des longueurs de la face longitudinale (40) à la face en largeur (41) est au moins de l'ordre de 1,25.

9. Dispositif de dosage (3) selon l'une quelconque des revendications précédentes, dans lequel l'élément de dosage comporte une section d'admission (39), qui comporte des courbures de bordure (42) convexes et/ou concaves par zones et/ou des faces longitudinales (40) droites par zones.

10. Dispositif de dosage (3) selon l'une quelconque des revendications précédentes, dans lequel l'élément de dosage (31) possède une structure en forme de pores ou de type capillaire.

11. Dispositif de dosage (3) selon l'une quelconque des revendications précédentes, dans lequel la section, sur une coupe parallèle à l'axe principal de l'élément de dosage (31), est cylindrique, conique, cylindrique et/ou conique par zones avec des diamètres différents par zones.

12. Dispositif de dosage (3) selon l'une quelconque des revendications précédentes, dans lequel l'élément de dosage (31) s'engage à l'intérieur du conduit de circulation.

13. Dispositif de dosage (3) selon l'une quelconque des revendications précédentes, dans lequel deux éléments de dosage (31) adjacents sont situés à une distance l'un de l'autre qui est au moins égale ou supérieure à leur diamètre minimum, laquelle mesure avantageusement 1 à 1,8 fois le diamètre minimum de l'élément de dosage, en particulier 1 à 1,6 fois ce diamètre, encore mieux 1 à 1,5 fois ce diamètre.

14. Dispositif de dosage (3) selon l'une quelconque des revendications précédentes, dans lequel la part occupée par les éléments de dosage (31) sur la surface du tronçon de conduit (29, 30) est de l'ordre de 20 % maximum en présence d'une pression de service maximale de 1 000 bars.

# Fig.1

EP 1 892 035 B1

# Fig.2

EP 1 892 035 B1

Fig.3

EP 1 892 035 B1

# Fig.4a

EP 1 892 035 B1

# Fig.4b

# Fig.5a

EP 1 892 035 B1

## Fig.5b

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19853021 A1
- DE 10150329 A1
- EP 1717008 A
- US 5935490 A
- WO 2004037510 A1
- EP 1714767 A
- DE 2241367
- EP 06405123 A
- EP 1153650 A1
- EP 06405129 A